# EUROPÄISCHE PATENTANMELDUNG

(11) **EP 0 855 478 A2**
(43) Veröffentlichungstag der Anmeldung: **29.07.1998**
(21) Anmeldenummer: 98100943.4
(22) Anmeldetag: 21.01.1998
(51) Int. Cl.: E04C 2/20

(54) **Verbundplatte aus Kunststoff und Verfahren zu ihrer Herstellung**

(30) Priorität: 22.01.1997 EP 97100947; 17.07.1997 DE 29712684 U
(71) Anmelder: Graf von Montgelas, Max Joseph, 84175 Gerzen (DE); Finke, Udo, 84175 Gerzen (DE)
(72) Erfinder: Graf von Montgelas, Max Joseph, 84175 Gerzen (DE); Finke, Udo, 84175 Gerzen (DE); Erlinghagen, Harald, 91338 Igensdorf (DE)
(74) Vertreter: Riederer Freiherr von Paar zu Schönau, Anton

(57) **Zusammenfassung**

Es wird eine Verbundplatte aus Kunststoff, insbesondere Polypropylen, z. B. für Bauzwecke und Verpackungszwecke beschrieben, die gemäß einer bevorzugten Ausführung mehrere Lagen (25 - 30) umfaßt, die jeweils für sich aus einem mehrschichtig extrudierten Verbund (1) bestehen und von denen zwei ebene Lagen (25, 30) und die anderen profilierte, nämlich ein Wellenprofil mit in einer Ebene liegenden Scheitellinien (14) aufweisende Lagen (26 - 29) sind, wobei diese Lagen entlang den Scheitellinien auf einer Seite der profilierten Lage bzw. an den Schnittpunkten der Scheitellinien benachbarter profilierter Lagen miteinander verschweißt sind (bei 33, 34). Zwischen den profilierten Lagen können noch jeweils aus einer ebenen Platte bestehende Lagen vorhanden sein. Der mehrschichtig extrudierte Verbund umfaßt zwei Außenschichten und eine Mittelschicht aus Polymeren aus der gleichen stofflichen Gruppe, dessen Mittelschicht aus einem hochkristallinen Polymer mit eingebauten zugfesten Fasern besteht, dessen Schmelzpunkt wenigstens 15° C höher liegt als die Schmelzpunkte der Polymere der Außenschichten und deren Elastizitätsmodul um wenigstens 10 % niedriger liegt als die Elastizitätsmodule der Polymere der Außenschichten. Es werden mehrere Varianten und auch das Herstellungsverfahren der Verbundplatten beschrieben.

## Beschreibung

Die Erfindung bezieht sich auf eine Verbundplatte aus Kunststoff insbesondere für Bauzwecke oder Verpackungszwecke, mit wenigstens einer Lage aus einem Verbund umfassend zwei Außenschichten und eine Mittelschicht aus Polymeren, vorzugsweise aliphatischen Polymeren, aus der gleichen stofflichen Gruppe, und auf ein Verfahren zur Herstellung einer mehrlagigen derartigen Verbundplatte.

Anwendungsgebiet der Verbundplatte, insbesondere in ihrer mehrlagigen Ausführung, ist in erster Linie die Verwendung als Schalung für den Betonbau, jedoch ist sie auch als Dacheindeckung, Isolierplatte und Füllung für Fensterkonstruktionen sowie für Türblätter, Treppenstufen, Gerüstbretter, Außenwandverkleidungen, Bodenbeläge und Deckenplatten mit Vorteil verwendbar. Ein weiteres bevorzugtes Anwendungsgebiet sind Packkartons und dergleichen.

Die Erfindung betrifft hierbei insbesondere eine mehrlagige Verbundplatte, deren einzelne Lagen aus mehrschichtigen Basis-Verbundplatten einer Grundstruktur gebildet sind, sie umfaßt jedoch auch diese Basis-Verbundplatten, die außer zur Herstellung der mehrlagigen Verbundplatte auch für andere Zwecke, beispielsweise als steifes folienartiges Verpackungs- oder Baumaterial, verwendbar sind. Als bevorzugte Beispiele seien zur Veranschaulichung folgende Plattenstärken genannt: Basis-Verbundplatte 1,5 mm, mehrlagige Verbundplatte bis 50 mm, z. B. 21 mm.

In der Praxis überwiegt als Material für Schalungen nach wie vor Holz. Es ist auch bekannt (z. B. DE-GM 94 10 525), auf die Schalung aus Holz oder Metall eine die Schaloberfläche bildende Deckschicht aus einem Kunststoff aufzubringen. Die Verwendung besonders konditionierter, insbesondere glatter Außenschichten oder am Beton haftender Außenschichten ist auch auf nicht aus Holz oder Metall bestehenden Schalungs-Kernlagen bekannt (DE-OS 31 17 861, DE-GM 89 15 323), desgleichen sind Schalplatten bekannt (DE-GM 89 16 035), die aus Kunststoffabfällen und Kunststoffgranulat gebildet sind. Weiterhin sind Schalungen bekannt, die aus Gittern, insbesondere auch Raumgittern bestehen, auf die eine Folie aufgezogen ist (DE-OS 36 01 884, DE-PS 37 23 676). Schließlich sind auch aus Platten bestehende Schaltafeln bekannt (DE-OS 38 04 506), die aus Kunststoff bestehen und auf der Rückseite mit Aussteifungselementen, insbesondere mit Rippen oder Stegen, versehen sind und ausgeschäumte Hohlräume enthalten können. Verbundplatten der eingangs genannten Art sind z. B. bekannt aus der DE-OS 42 01 319 und aus den DE-GM 80 26 197 und 94 15 570.

Zusammengefaßtdargestellt haben sich dieseverschiedenen Lösungen nicht durchgesetzt. Nach wie vor werden in der Praxis Holzschalungen bevorzugt, da sie hinsichtlich Biegesteifigkeit, Abriebfestigkeit und Punktlast-Unempfindlichkeit sowie hinsichtlich Nebeneigenschaften wie Nagelbarkeit usw. und auch hinsichtlich des Preises nach wie vor die zweckmäßigste Lösung darstellen, obwohl sie hinsichtlich Gewicht, mangelhafter Wiederverwendbarkeit und Entsorgungsproblemen keineswegs optimal sind.

Andererseits sind Schalungen aus massiven Kunststoffplatten praktisch unbezahlbar.

Jedoch auch bei Kunststoffplatten, die im Bauwesen für andere Zwecke verwendet werden, besteht generell eine Diskrepanz zwischen Festigkeitseigenschaften und erwünschten Oberflächeneigenschaften.

Die erfindungsgemäße Verbundplatte, zunächst noch als einlagige Platte, ist dadurch gekennzeichnet, daß der Verbund ein mehrschichtig extrudierter Verbund ist, dessen Mittelschicht aus einem hochkristallinen Polymer mit eingebauten zugfesten Fasern, insbesondere Stahl-, Glas- oder Kohlefasern, besteht, dessen Schmelzpunkt wenigstens 15°, vorzugsweise wenigstens 30° höher liegt als die Schmelzpunkte der Polymere der Außenschichten und deren Elastizitätsmodul je nach technischer Beanspruchung um wenigstens 10 % niedriger ist als die Elastizitätsmodule der Polymere der Außenschichten. Die wenigstens drei Plattenschichten werden dadurch, daß sie aus der gleichen stofflichen Gruppe und mehrschichtig extrudiert sind, mit sehr hoher Haftung zusammengehalten, einer für flexible Folien an sich bekannten Technik; die Mittelschicht erbringt die mechanische Festigkeit und die Außenschichten sind durch die Wahl entsprechend modifizierter Varianten des Polymers leicht schweißbar relativ weich, damit die Platte schlagfest ist und sich Nagellöcher wieder schließen, oder relativ hart, damit im Fall der Verwendung als Schalungsoberfläche diese Schicht reibungsunempfindlich ist und sich der Beton auch ohne die Verwendung von Schalöl nach dem Abbinden leicht löst. Mit dem niedrigeren Elastizitäts-Modul wird eine Dämpfungswirkung bei Schlagbeanspruchung und niedrigeren Temperaturen erzeugt. Als Material für die Verbundplatte werden Polyolefine, und zwar insbesondere Polypropylene bevorzugt. Die Verwendung dieser Materialien ist im Schalungsbau an sich bekannt (DE-OS 42 01 319, DE-GM 296 12 430). Sie erweisen sich im Rahmen der Erfindung als besonders zweckmäßig, wobei hinsichtlich spezieller Eigenschaften auch andere, aber zumeist teurere Kunststoffe in Frage kommen; beispielsweise sei hingewiesen auf lineare Polyester, Polyethylenterephtalat und Polybutylenterephtalat, die auch in Kombination verwendbar sind, eine bessere Beständigkeit auch bei extremen Temperaturen haben und auch transparent herstellbar sind, jedoch teurer sind als Polypropylen. Weiterhin seien genannt Polyethylen, Keton-Kunststoffe einschließlich Polyetherketon, das aber wiederum wegen seines hohen Preises nur in Ausnahmefällen herangezogen werden dürfte, oder auch PVC und Polyurethane.

Die zugfesten Fasern der Mittelschicht sind vorzugsweise mit dem Polymer chemisch, also durch chemische Haftvermittlung, gekoppelte Fasern.

Diese einlagige Verbundplatte eignet sich als Basis-Verbundplatte zur Herstellung einer mehrlagigen Verbundplatte. Letztere umfaßt gemäß der Erfindung wenigstens zwei Lagen, die jeweils für sich aus einer Basis-Verbundplatte bestehen; bei zwei Lagen ist eine der Lagen eine ebene Lage und die andere eine profilierte Lage, die ein Wellenprofil mit in einer Ebene liegenden Scheitellinien hat, wobei diese Lagen entlang den Scheitellinien auf einer Seite der profilierten Lage miteinander verschweißt sind. Die ebene Lage, also eine Verbundplatte nach Anspruch 1, dient als Außenschicht und ist an ihrer Rückseite mit dem Wellenprofil, das insbesondere ein Sägezahn- oder Zick-Zack-Profil sein kann, verbunden. Die ebene Lage weist hierbei an ihrer mit der profilierten Lage verbundenen Seite eine leicht schweißbare Außenschicht auf, desgleichen die profilierte Lage an ihrer mit der ebenen Lage verbundenen Seite. Die nur zweilagige Verbundplatte kann beispielsweise an Stellen Verwendung finden, bei denen die Schalung bogenförmig als Zylindersegment verwendet werden soll. Das Wellenprofil ist vorzugsweise ein Zick-Zack-Profil, dessen Scheitellinien zueinander parallele Kanten sind, zwischen denen Flanken liegen, deren Außenseiten unter einem Neigungswinkel zwischen 30° und 60° an der Scheitellinie zusammenlaufen. Die profilierte Lage hat vorzugsweise einen Volumen-Füllungsgrad von 30 % bis 50 %.

Die erfindungsgemäße mehrlagige Verbundplatte besteht gemäß einer bevorzugten Ausführungsform aus mehr als zwei, nämlich insbesondere aus sechs Lagen, von denen die beiden Außenlagen dreischichtige ebene Verbundplatten und die vier dazwischen liegenden Lagen profilierte Verbundplatten sind, wobei diese profilierten Lagen unmittelbar miteinander verschweißt sind und jede dieser Lagen zueinander parallele Scheitellinien aufweist und die Scheitellinien von jeweils benachbarten profilierten Lagen zueinander einen Winkel von über 20°, vorzugsweise einen rechten Winkel, einnehmen. Benachbarte profilierte Lagen berühren sich also nur an Punkten, wobei gemäß einer bevorzugten Bemessung eine Punktdichte von neun Berührungspunkten je Quadratzentimeter vorliegt. Mit diesem Stapel miteinander verschweißter ebener und profilierter Platten läßt sich ein relativ steifer, aber doch auch in vorbestimmtem Ausmaß elastischer Verbund schaffen, dessen Materialverbrauch und Gewicht verhältnismäßig niedrig sind. Im Vergleich zu einer äquivalenten Holzplatte läßt sich eine Gewichtsersparnis von zumindest 50 % erzielen. Die Punktauflage der benachbarten profilierten Platten ermöglicht optimale Schweißverbindungen, deren Zustandekommen durch die Hitze und den Druck an den Berührpunkten bewirkt wird. Es ist möglich, die beiderseitigen Wellentäler der profilierten Lage bzw. Lagen auszuschäumen, wodurch zunächst beim Schweißvorgang die Temperaturhaltung bis zur Durchführung des Schweißvorgangs erleichtert wird und später der Vorteil erzielt wird, daß die Platte davor geschützt ist, daß Wasser hineinläuft, das gewichtserhöhend wirkt und bei Frost zu Schäden der Platte führen könnte.

Die so aufgebaute mehrlagige Platte hat also die Besonderheit eines Gitters von Schweißpunkten, an denen jeweils die Scheitellinien benachbarter profilierter Lagen miteinanderverschweißt sind. Je nach Anwendungszweck und Produktionsmöglichkeiten kann die Gestaltung der Verbundplatte variiert werden, beispielsweise mit nur zwei profilierten Lagen und welligen Außenflächen oder mit einer Vielzahl profilierter Lagen und ebenen Außenlagen, sowie mit unterschiedlicher Wellungssteilheit und unterschiedlicher Lagenstärke, wodurch auch die Dichte der Schweißpunkte variiert wird. Die Verbundplatten können auch mit einer gewissen Flexibilität hergestellt werden, beispielsweise für Verpackungszwecke, und Knick- und Schnittlinien zur Bildung eines Kartonzuschnitts aufweisen.

Ergibt sich jedoch eine sehr niedrige Zahl von Schweißpunkten, bezogen auf die Fläche, so kann die Folge sein, daß die Festigkeit der Verbundplatte, also der Zusammenhalt der Lagen, leidet. Einerseits die Möglichkeiten der Schweißung, andererseits die Gesichtspunkte der Festigkeit können eine Variation der mehrlagigen Verbundplatte dahingehend als zweckmäßig erscheinen lassen, daß zwischen wenigstens zwei benachbarten profilierten Lagen eine Zwischenplatte eingefügt ist, die mit den Scheitellinien der daran anstoßenden profilierten Lagen verschweißt ist. Die Linienschweißung kann einen festeren Zusammenhalt der Schweißung ergeben, als eine nur punktweise Schweißung, und zwar jedenfalls dann, wenn die gleiche Eindringtiefe erzielt wird. Die Anstrebung der gleichen Eindringtiefe ist natürlich nur dann sinnvoll, wenn dies ohne solche Preßkraft möglich ist, daß hierdurch die mehrlagige Struktur Schaden nehmen würde. Die Zwischenplatten können zwischen sämtlichen profilierten Lagen, zwischen einigen profilierten Lagen oder als einzige Zwischenplatte zwischen zweien der profilierten Lagen eingesetzt sein. Die profilierten Lagen sind damit mit dieser Zwischenplatte nicht nur punktweise, sondern entlang Linien verschweißt, was eine abgewandelte und je nach vorhandener Gerätschaft unter Umständen einfachere Schweißtechnik bedingt und was die Festigkeits- und Steifigkeitseigenschaften beeinflußt. Die Einfügung der Zwischenplatte ist insbesondere dann bedeutsam, wenn aufgrund einer geringeren Steilheit bzw. kleinen Amplitude der Welligkeit, z. B. bei einem relativ flachen Zick-Zack, ohne die Zwischenplatte die Dichte der Schweißpunkte sehr gering wäre, was insbesondere bei flexiblen Verbundplatten der Fall sein kann.

Speziell bei mehrlagigen Verbundplatten für Verpackungszwecke kann die Anbringung von Knick- und Schnittlinien und auch das Aufkleben und Aufschweißen von Biegescharnierstreifen z. B. zur Herstellung von Verpackungs- und Umzugskartons von Vorteil sein, und zwar vor allem bei solchen mehrlagigen Verbundplatten, die die beschriebene Zwischenplatte nicht aufweisen und einigermaßen biegsam sind. Für kleinere Schachteln werden dünnere Verbundplatten, z. B. mit nur einer einzigen profilierten Lage bevorzugt. Entsprechend hergestellte Verpackungseinheiten sind wasserunempfindlich und gut wiederverwendbar.

Die Erfindung umfaßt auch ein Verfahren zum Herstellen der mehrlagigen Verbundplatten, wozu zunächst ein entsprechender Anteil der mehrschichtig extrudierten ebenen Platten zu den ein Wellenprofil aufweisenden profilierten Platten durch Tiefziehen umgeformt wird. Aus wirtschaftlichen Gründen ist es zu bevorzugen, zunächst ebene wie profilierte Platten in einer gewissen Anzahl auf Vorrat herzustellen und dann in einem späteren Arbeitsschritt die Platten aus dem Lager zu holen und durch Verschweißen zu verbinden. Zum Verbinden bringt man die Lagen oder zumindest deren zu schweißende Außenschicht auf eine Temperatur, die zwischen den Schmelzpunkten der Mittelschicht und der Außenschichten der Lagen liegt, und zum Verschweißen legt man sie in diesem erwärmten Zustand mit Kanten- bzw. Punktekontakt aufeinander und drückt sie aufeinander. Vorzugsweise werden Verbindungen zu einer Zeit nur in einer einzigen Verbindungsebene zwischen zwei Lagen erzeugt, beispielsweise indem man die Lagen einzeln zugeführt und mit dem bereits erstellten Verbund verschweißt, derart, daß also bei jedem Schweißvorgang nur eine einzige Zwischenlagenverbindung hergestellt wird, wodurch die Schweißtemperatur an den beabsichtigten Verbindungspunkten leichter beherrscht werden kann.

Die Platte kann aber auch in nur einem Arbeitsgang hergestellt werden.

Die Herstellung der profilierten Lagen aus den ebenen Platten durch Tiefziehen erfolgt vorzugsweise mit Hilfe eines Prägekalanders, in dessen Spalt die ebene Platte einläuft und aus dessen Spalt die profilierte Platte ausläuft. Es ist auch möglich, die Platte insgesamt in einem Patrizen-Matrizen-Gesenk tiefzuziehen. Hierfür ist jedoch insgesamt eine erheblich höhere Preßkraft erforderlich. Die Formgebung erfolgt zweckmäßigerweise so, daß ein Zick-Zack-Profil mit dickenmäßig etwas schwächeren Scheitelbereichen entsteht, entlang denen die Außenschicht dann leichter erhitzt und angeschmolzen werden kann, während die etwas dickeren Flanken noch nicht zu erweichen beginnen. Die bei einem Verstrecken durch Tiefziehen herrschende Materialtemperatur liegt - je nach Material - bei den derzeit bevorzugt ins Auge gefaßten Polymeren im Bereich von 65° C bis 260° C. Zum Aufbringen der Wärme eignet sich insbesondere eine langwellige Infrarotstrahlung. Kurzwellige Infrarotstrahlung ist zwar hinsichtlich der Erwärmungswirkung in gleicher Weise wirksam, erfordert aber einen höheren Geräte- und Kostenaufwand. Zur Erhöhung der Flächenpressung an den Berührungs- und sodann Verbindungspunkten während des gegenseitigen Eindringens in die jeweilige Außenschicht der Nachbartage kann das Zick-Zack-Profil so gewählt sein, daß der Winkel im Scheitelbereich noch spitzer ist als der Neigungswinkel der Flanken zueinander, also im Sinne einer "Eselsrückenform".

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:
- Fig. 1: in schematischer perspektivischer Darstellung eine einlagige ebene Verbundplatte, sowie andeutungsweise die Installation zu deren Herstellung;
- Fig. 2: in verkleinertem Maßstab in perspektivischer Darstellung eine aus der ebenen Verbundplatte von Fig. 1 durch Tiefziehen hergestellte profilierte Platte;
- Fig. 3: in perspektivischer Darstellung eine Ecke einer zweilagigen Verbundplatte;
- Fig. 4: in perspektivischer Darstellung eine Ecke einer sechslagigen Verbundplatte;
- Fig. 5: einen Schnitt durch eine Außenlage, eine erste Innenlage und eine zweite Innenlage einer mehrlagigen Verbundplatte unter Darstellung eines Verbindungspunkts und einer Verbindungslinie;
- Fig. 6: in perspektivischer Darstellung eine Ecke einer siebenlagigen Verbundplatte, die in der Mitte eine Lage in Form einer Zwischenplatte hat;
- Fig. 7: einen Schnitt durch einen Verbund aus mehreren profilierten Lagen, teils mit und teils ohne dazwischenliegende Zwischenplatte, unter Darstellung eines Verbindungspunkts und mehrerer Verbindungslinien;
- Fig. 8: in Stirnansicht einen Abschnitt eines abgewandelten Plattenprofils einer Lage einer Verbundplatte in zwei verschiedenen Ausführungen;
- Fig. 9: in perspektivischer Darstellung ein Stück einer sechslagigen Verbundplatte, die eine Knicklinie aufweist;
- Fig. 10: in perspektivischer schematischer Darstellung einen Faltkarton aus dem Material von Fig. 9;
- Fig. 11: eine Seitenansicht einer abgewandelten Verbundplatte zur Verwendung als Alleinplatte oder als Außenlage, mit einer Andeutung einer Herstellungsinstallation.

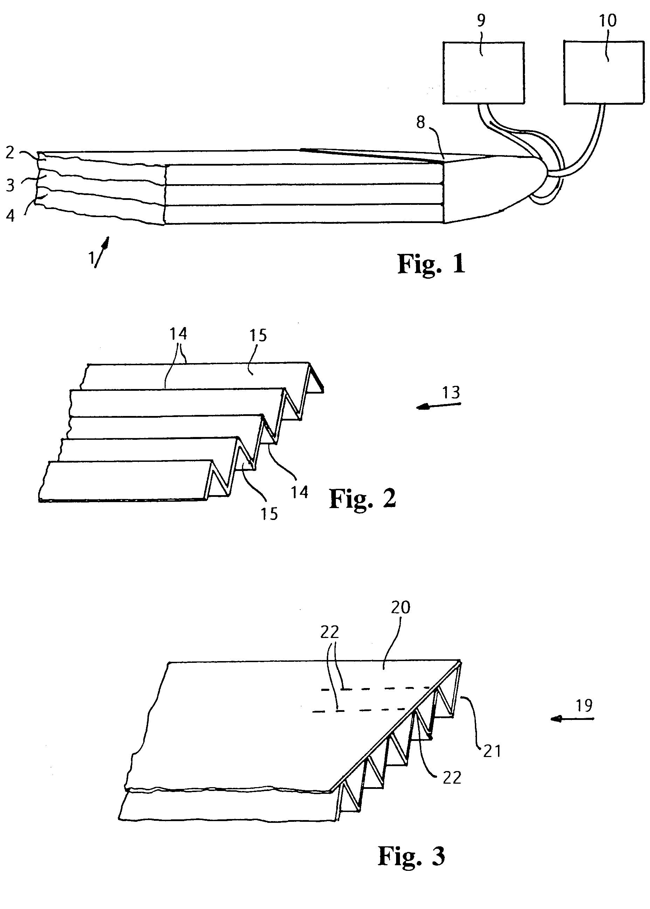

Fig. 1 zeigt eine im folgenden als Basisplatte 1 bezeichnete ebene Verbundplatte aus drei Schichten, nämlich einer Außenschicht 2, einer Mittelschicht 3 und einer weiteren Außenschicht 4. Die Basisplatte 1 ist andeutungsweise bei ihrem Austritt aus einer dreifachen Extrudierdüse 8 dargestellt, die aus zwei Rohstofftanks 9 und 10 gespeist wird, von denen der Tank 9 das Material für die Außenschichten 2 und 4 und der Tank 10 das Material für die Mittelschicht 3 liefert.

Die drei Schichten 2, 3 und 4 der Basisplatte 1 bestehen aus Polypropylenen, nämlich die Außenschichten 2 und 4 aus einem weichen Polypropylen eines Schmelzpunkts von ca. 130° C und die Mittelschicht 3 aus einem mechanisch sehr zugfesten Polypropylen, mit dem Glaslangfasern chemisch gekoppelt sind, mit einem Schmelzpunkt von ca. 165° C. Die Schmelzpunktdifferenz von ca. 35° C ist relativ großzügig bemessen, sie sollte jedoch nach Möglichkeit nicht unter 30° liegen und ist praktisch kaum mehr im Sinne der Erfindung verwertbar wenn sie unter 15° C liegt.

Bei der Basisplatte 1 nach Fig. 1 ist das Material der Außenschichten 2 und 4 gleich. Es besteht jedoch auch Bedarf an Basisplatten 1 mit unterschiedlichen Materialien der Außenschichten 2 und 4. Durch Copolymerkomponenten werden in an sich bekannter Weise die Eigenschaften der Kunststoffmaterialien eingestellt, beispielsweise kann die Außenschicht 2 sehr hart, schlagfest und temperaturbeständig bis z. B. -20° ausgebildet sein, während die Außenschicht 4 nach wie vor eine weiche, leicht schweißbare Schicht ist. Für andere Anwendungen als Schalungen, beispielsweise als Bodenplatte, kann es wiederum erforderlich sein, die Außenschicht 2 aus einem Material hoher Haftreibung herzustellen, oder bei der Verwendung als Wandplatte aus einem Material, das gewisse Fließeigenschaften hat und entstehende Löcher wie Nagellöcher nach dem Entfernen der Lochursache wieder schließt. Bei solchen unterschiedlichen Materialeigenschaften der Außenschichten 2 und 4 bedarf es eines dritten Rohstofftanks für eine der Außenschichten.

Die Schichten 2, 3 und 4 bestehen aus Materialien der gleichen stofflichen Gruppe, nämlich Propylenen, wodurch die Bindung zwischen ihnen sehr fest wird. Die Mittelschicht 3 sorgt für die geforderten mechanischen Festigkeitseigenschaften und die Außenschichten 2 und 4 für die gewünschten Kontakteigenschaften.

Zur Herstellung einer mehrlagigen Verbundplatte werden passende Ausführungsformen der Basisplatte 1 durch Tiefziehen mit einem Wellenprofil versehen, wie es in Fig. 2 dargestellt ist. Hierzu wird vorzugsweise ein Prägekalander verwendet, dessen profilierte Walzen die Basisplatte 1 prägen und in der Richtung quer zur Laufrichtung längen, was in einem gegebenen Temperaturbereich durchgeführt wird, der bei Polypropylen in der Größenordnung von ca. 120° C liegt, und zwar im Verlaufe des Abkühlens von einer vorhergehenden erheblich höheren Temperatur vorzugsweise ca. 170° C. Diese vorherige Temperatur kann beispielsweise diejenige beim Extrudieren sein, so daß der Prägekalander kurz nach der Extrudierdüse und nach kontrollierter Abkühlung angeordnet ist. Aus wirtschaftlichen Gründen erscheint es jedoch zumeist als zweckmäßiger, die extrudierten Basisplatten zunächst zwischenzulagern, sie zum späteren Tiefziehen wieder insgesamt zu erwärmen, und sie dann wieder auf ca. 120° C abzukühlen, um dann beim Tiefziehen die Platte zu verstrecken oder, nach dieser Abkühlung, "kaltzuverstrecken". Die Vorgänge beim Kaltverstrecken sind an sich bekannt und werden insbesondere bei Folien angewandt. Nach dem Kalandern läßt man die profilierten Platten zweckmäßigerweise abkühlen und lagert sie bis zur Weiterverarbeitung.

Profilierte Platten werden zumeist aus Basisplatten 1 mit gleichartigen, leicht schmelzbaren Außenschichten 2 und 4 hergestellt. Hat die Basisplatte eine Stärke von z. B. 1,5 mm, so hat die profilierte Platte nur noch eine Stärke in der Größenordnung von 0,75 mm. Sie weist beiderseitige Scheitellinien 14 und Flanken 15 auf. Die in Fig. 2 dargestellte strenge Zick-Zack-Form mit ebenen Flanken 15 und scharfen Kanten als Scheitellinien 14 erweist sich als vorteilhaft, ist jedoch keineswegs die einzig mögliche Wellenform. Beispielsweise wären als Wellenformen auch eine Sinusform möglich, die sich allerdings wegen der relativ großen Auflageflächen nicht so leicht verschweißen läßt, oder später beschriebene Platten-Stufenprofile.

Die profilierte Platte 13 dient als Lage in einer mehrlagigen Verbundplatte. Fig. 3 veranschaulicht eine einfachste Form einer solchen Verbundplatte, die mit 19 bezeichnet ist. Sie besteht aus einer ersten, ebenen Lage 20, die durch eine Basisplatte 1 gebildet ist, und einer zweiten, profilierten Lage 21, die durch eine profilierte Platte 13 gebildet ist. Die Lagen 20 und 21 sind entlang Verbindungslinien 22 miteinander verschweißt. Die Verbindungslinien fallen mit den Scheitellinien 14 der profilierten Platte zusammen. Die Verschweißung wird dadurch hergestellt, daß die die Lagen bildenden Platten 1 und 13 durch Bestrahlung mit langwelligem Infrarotlicht auf den einander zugewandten Plattenseiten auf eine Temperatur erwärmt werden, die zwischen der Schmelztemperatur der miteinander zu kontaktierenden Außenschichten 2 bzw. 4 und der Schmelztemperatur der beiden Mittelschichten 3 liegt. Die Außenschichten werden also zumindest plastifiziert oder völlig geschmolzen, woraufhin die Platten mit Druck aneinandergepreßt werden. Dies erfolgt zweckmäßigerweise mit Hilfe des Durchlaufs durch einen Preßkalander mit genau eingestelltem Walzenspalt, wobei durch Druck und Hitze die einander berührenden Außenschichten 2 und 4 ineinanderfließen, und zwar vorzugsweise bis zur gegenseitigen Berührung der beiden Mittelschichten 3.

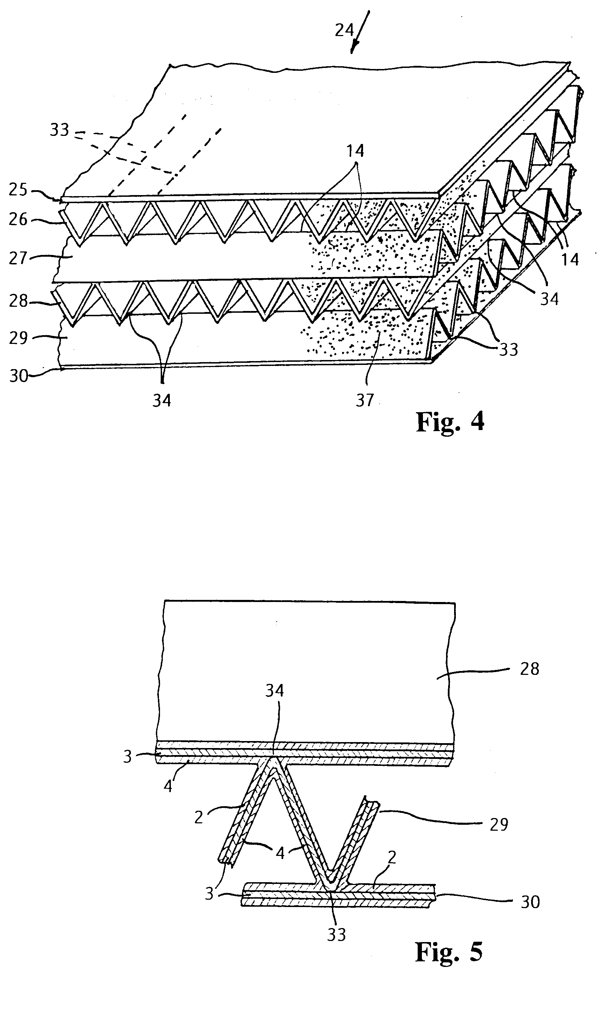

Die zweilagige Verbundplatte 19 gemäß Fig. 3 ist für Bauzwecke nur für spezielle Anwendungen zweckmäßig, beispielsweise für im Rücken unterstützte oder bogenförmige Schalungen. Universell und insbesondere als Schalungsplatte anwendbar ist die sechslagige Verbundplatte 24 gemäß Fig. 4. Ihre sechs Lagen sind eine außenliegende erste Lage 25, bestehend aus einer ebenen Basisplatte entsprechend der Platte 1; eine zweite Lage 26, bestehend aus einer profilierten Platte entsprechend der profilierten Platte 13 von Fig. 2; eine dritte Lage 27, ebenfalls bestehend aus einer profilierten Platte entsprechend der Platte 13, jedoch in um 90 Grad verdrehter Anordnung, derart, daß sich die unteren Scheitellinien 14 der Lage 26 und die oberen Scheitellinien 14 der Lage 27 unter rechten Winkeln schneiden; eine vierte Lage 28, die wiederum aus einer profilierten Platte 13 besteht, welche in gleicher Weise wie die Platte der zweiten Lage 26 orientiert ist; eine fünfte Lage 29, die der dritten Lage 27 gleicht; und eine sechste Lage 30, bestehend aus einer ebenen Basisplatte 1. Die Lagen 25 und 30 sind die Außenplatten der Verbundplatte 24. In Fig. 4 sind die Platten der Lagen 26 und 28, ebenso wie auch die Platten der Lagen 27 und 29 jeweils etwa gleichphasig dargestellt, also mit gerade übereinander bzw. untereinander liegenden Scheiteln. Dies ist nicht an sich notwendig, die Platten könnten auch jeweils quer zu ihren Scheitellinien versetzt eingebaut sein.

Die erste Lage 25 und die sechste Lage 30 haben an ihren Außenseiten harte und kälteunempfindliche Schichten, und an ihren den Lagen 26 bzw. 29 zugewandten Innenseiten weichere, gut schweißbare Schichten. Die Platten der Lagen 26 bis 29 haben beiderseits gut schweißbare Schichten. Die Lagen 26 und 29 sind mit den Lagen 25 und 30 entlang Schweißlinien 33, die mit den kantenförmigen Scheitellinien 14 zusammenfallen, verbunden; die Lage 26 ist mit der Lage 27, die Lage 27 mit der Lage 28 und die Lage 28 mit der Lage 29 jeweils über Schweißpunkte 34 miteinander verbunden, nämlich den Schnittpunkten der jeweiligen oberen und unteren sich unter 90° schneidenden Scheitellinien 14. Die Schweißpunkte 34 haben beim dargestellten Beispiel, das einer gesamten Plattendicke von 21 mm entspricht, eine Dichte von 9 Schweißpunkten/cm². Die Zahl der Schweißpunkte variiert je nach Plattenvariation.

In Fig. 4 ist in einem Teil der dargestellten Platte durch eine Punktschraffur eine Schaumfüllung 37 dargestellt. Die Schaumdichte liegt beim beschriebenen Beispiel in der Größenordnung von 20 kg/m³. Die Schaumfüllung erhöht also das Gewicht der Platte kaum, verhindert aber den Wassereintritt und ist schallschluckend. Diese Eigenschaften können beispielsweise bei einem Einbau in einen Estrich zur Verminderung des Trittschalls oder bei einer verlorenen Schalung von besonderer Bedeutung sein. Außerdem verbindet der Schaum eventuelle einzelne kalte, also mißlungene Schweißpunkte.

Die Verbundplatte 24 nach Fig. 4 weist ausgezeichnete Eigenschaften hinsichtlich Biegesteifigkeit, Flächendruckbelastbarkeit und Punktdruckbelastbarkeit, Abriebfestigkeit, Wärme und Kältefestigkeit sowie Handhabbarkeit auf. Sie hat niedriges Gewicht, gute Verarbeitbarkeit, nämlich die Möglichkeit des Sägens, Bohrens und Nagelns, bei hohem Elastizitätsmodul, sowie eine nach dem Einsatzzweck eingestellte Oberflächenbeschaffenheit, nämlich glatt, rauh, stumpf, mit einem Muster versehen und dergleichen. Ihre bevorzugte Verwendung ist die für Schalungen im Betonbau.

Zur Herstellung der Verbundplatte 24 werden zunächst Basisplatten 1 und profilierte Platten 13 in der oben beschriebenen Weise und mit den jeweils geforderten Materialeigenschaften insbesondere der Außenschichten 2 und 4 hergestellt. Sodann wird jeweils für eine Verbindungsebene, beispielsweise die Ebene zwischen den Lagen 26 und 27, mit langwelligem Infrarotlicht die untere Außenschicht 4 der profilierten Platte der Lage 26 und die obere Außenschicht 2 der profilierten Platte der Lage 27 so erwärmt, daß sie plastifiziert oder angeschmolzen werden, während jeweils die Mittelschicht 3 ihre Form und Stabilität behält. Weiterhin wird - optional - heißes aufschäumendes Polypropylenmaterial auf die sich gegenüberliegenden Oberflächen aufgebracht, wodurch zusätzlich Wärme herangeführt wird und die Schweißtemperatur während anschließender Transportschritte konserviert wird. Die beiden Lagen 26 und 27 werden in richtiger Position aufeinandergelegt und durch einen Preßkalander mit genau eingestellter Spaltbreite hindurchgeführt, wodurch sie an ihren Berührpunkten, die zu den Schweißpunkten 34 werden, verbunden werden.

Aus Gründen der Kalandereinstellung kann es zweckmäßig sein, nun zunächst die Lagen 28 und 29 in gleicher Weise miteinander zu verschweißen und dann, nach einer neuen Kalandereinstellung, die Doppellage 26 + 27 einerseits und die Doppellage 28 + 29 andererseits wiederum in gleicher Weise miteinander zu verschweißen. Nach erneuten Spalteinstellungen des Preßkalanders werden wiederum in gleicher Weise nacheinander oder auch gleichzeitig die Lagen 25 und 30 aufgeschweißt, wobei die obersten bzw. untersten Scheitellinien 14 des soweit bereits hergestellten Verbunds zu den Schweißlinien 33 werden. Vor oder während der jeweiligen Schweißvorgänge wird der Kunststoffschaum eingebracht und füllt die Hohlräume aus. Nach dem Abkühlen ist die Platte fertig. Das Verschweißen der einzelnen Lagen kann natürlich auch in anderer Reihenfolge durchgeführt werden. Die beschriebene Einzelfertigung ist aus wirtschaftlichen Gründen zu empfehlen. Technisch ist eine Produktion auch in einem einzigen Arbeitsgang möglich.

Anhand der Fig. 5 werden die Vorgänge beim Schweißen noch näher dargestellt. Die Figur zeigt im Schnitt einen unteren Ausschnitt der Platte, mit Teilen der Lagen 28, 29 und 30. Bei der dargestellten Ausführung berühren sich die Mittelschichten 3 der Lagen 28 und 29 sowie der Lagen 29 und 30 an den Schweißpunkten 34 bzw. der Schweißlinie 33. Das Material der unteren Außenschicht 4 bzw. der oberen Außenschicht 2 der Lagen 28 und 29 bzw. der unteren Außenschicht 4 und der oberen Außenschicht 2 der Lagen 29 und 30 ist im Schweißpunkt- bzw. Schweißlinienbereich zwischen den Mittelschichten 3 verdrängt. Durch diese Berührung wird der Elastizitätsmodul in Dickenrichtung erheblich erhöht. Soweit ein bestimmter Elastizitätsmodul erwünscht ist, kann jedoch durch entsprechende Spaltbreiteneinstellung des Preßkalanders auch noch Material der Außenschichten 2 und 4 zwischen den Mittelschichten 3 stehen bleiben. An den Schweißpunkten 34 bewirkt der Preßkalander zu Beginn der Aufeinanderpressung eine Flächenpressung in der Größenordnung von größer als 10 N/mm², vorzugsweise bis 200 N/mm², die jedoch beim gegenseitigen Eindringen, beispielsweise um 0.5 mm, wieder absinkt. Die Verpressung hängt von verschiedenen Verfahrensparametem ab, nämlich vom Material, von der Viskosität in Abhängigkeit von der Erwärmung und von der Flächenpressung bzw. vom Druck, die bzw. der von der Fläche, der Preßkraft und der Form der Verpressung abhängt. Das gegenseitige Eindringen in die jeweilige benachbarte Außenschicht 2 bzw. 4 wird durch einen spitzen Winkel im Scheitelbereich erleichtert, was die Anwendung einer niedrigeren Preßkraft und somit die Verwendung eines leichteren Kalanders ermöglicht. Relativ steile Flanken 15 der profilierten Platten in den Lagen 26 bis 29 erhöhen außerdem den Elastizitätsmodul in Dickenrichtung, führen jedoch andererseits zu einem höheren Volumenfüllungsgrad und damit zu einem höheren Gewicht der Platte. Je nach den im Einzelfall erforderlichen Charakteristiken der Platten kann hier ein Optimum bestimmt werden.

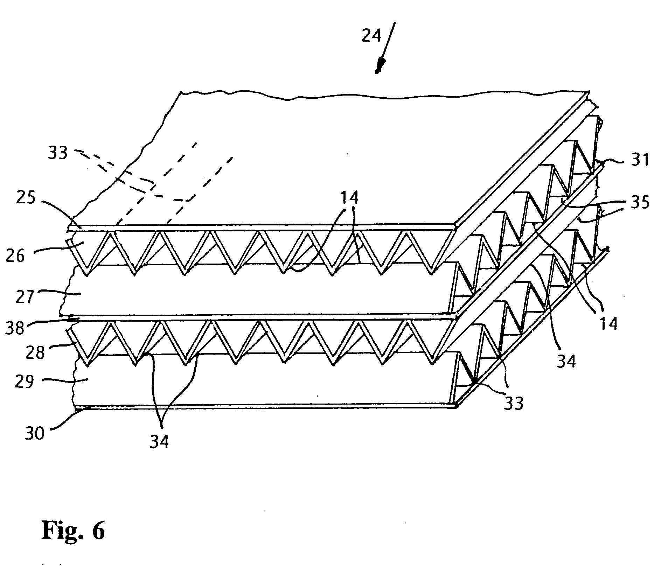

Fig. 6 zeigt die ebene Verbundplatte 24 in abgewandelter Ausführung, nämlich mit sieben Lagen. Ihre sieben Lagen sind zunächst wie gemäß Fig. 4 die außenliegende erste Lage 25, die zweite, profilierte Lage 26, die dritte, profilierte Lage 27, die vierte, profilierten Lage 28, die fünfte, profilierte Lage 29 und die sechste Lage 30; insoweit gleicht also die Platte nach Fig. 6 der nach Fig. 4. Sie enthält jedoch zusätzlich, zwischen die Lagen 27 und 28 eingefügt und über Schweißlinien 35 mit ihr verbunden, eine Lage aus einer ebenen Zwischenplatte 38, die mit den daran anliegenden profilierten Lagen 27 und 28 entlang deren die Zwischenplatte 38 berührenden Scheitellinien 14 verschweißt ist. Jedoch auch zwischen den Lagen 26 und 27 sowie 28 und 29 könnten solche Zwischenplatten 38 eingesetzt sein, und die Verschweißung kann sich beispielsweise auch auf jede zweite, dritte usw. Scheitellinie 14 der benachbarten profilierten Platten beschränken.

In Fig. 6 ist in der dargestellten Platte keine Schaumfüllung dargestellt.

Die beim Beispiel von Fig. 6 einzige Zwischenplatte 38 beeinflußt die Biegeeigenschaften und die Dicken-Zugfestigkeit der Verbundplatte 24 und erweist sich beispielsweise dann als bedeutsam, wenn die Scheitellinien in größerem Abstand voneinander liegen, so daß sich ohne Zwischenplatte nur eine niedrige Schweißpunktedichte ergäbe, oder wenn nur eine Auswahl der Scheitellinien 14 als Schweißlinien 35 verwendet werden.

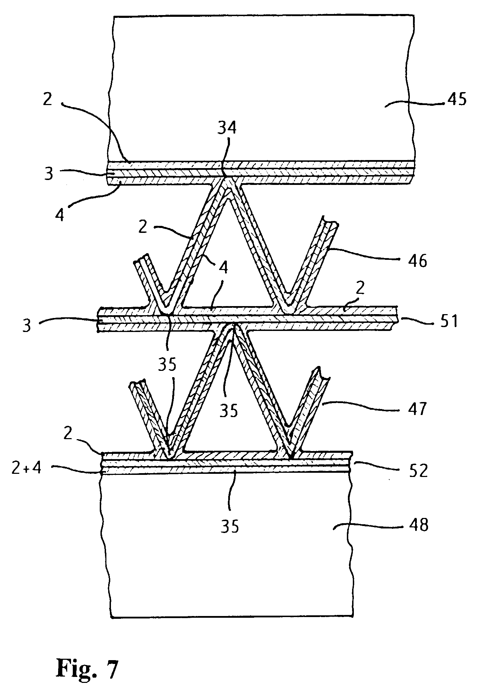

Die Fig. 7 zeigt im Schnitt einen Ausschnitt einer Platte, mit Teilen von vier profilierten Lagen 45, 46, 47 und 48. Zwischen den Lagen 46 und 47 befindet sich eine Zwischenplatte 51 und zwischen den Lagen 47 und 48 eine Zwischenplatte 52.

Bei der Darstellung von Fig. 7 sind zur Veranschaulichung der Vielfalt der Möglichkeiten die relativen Orientierungen der Lagen 45 und 46 einerseits und der Lagen 47 und 48 andererseits jeweils um 90° verdreht dargestellt, während die Lagen 46 und 47 beiderseits der Zwischenplatte 51 parallel orientiert und gleichphasig sind, wodurch die Schweißlinien 35 an der Zwischenplatte 51 um eine viertel Wellenperiode versetzt sind. Die Bedeutung dieser Versetzung liegt in der Möglichkeit der Beeinflussung der Flexibilität der Verbundplatte in einer Biegerichtung. Bei der Darstellung der Zwischenplatte 52 und der Lage 48 ist zu beachten, daß die untere Außenschicht 4 der Zwischenplatte 52 und die obere Außenschicht 2 der Lage 48 in der Bildebene zu einer gemeinsamen Schicht verschmolzen sind. Die Darstellung ähnelt deshalb derjenigen zwischen den Lagen 45 und 46.

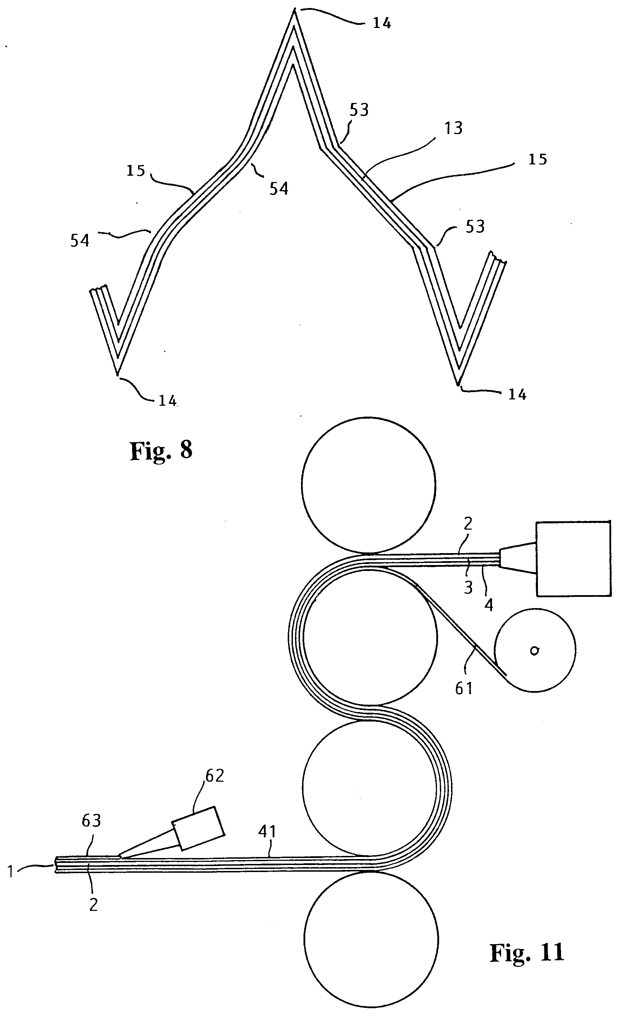

Fig. 8 zeigt eine Wellenform der profilierten Platten, bei der die Forderungen nach einem spitzen Winkel im Bereich der Scheitellinien 14 und nach einem flacheren Flankenwinkel zur Erniedrigung des Plattengewichts durch zusätzliche Knicklinien 53 oder (in der Figur links dargestellt) Bogenbereiche 54 in den Flanken 15 kombiniert erfüllt werden.

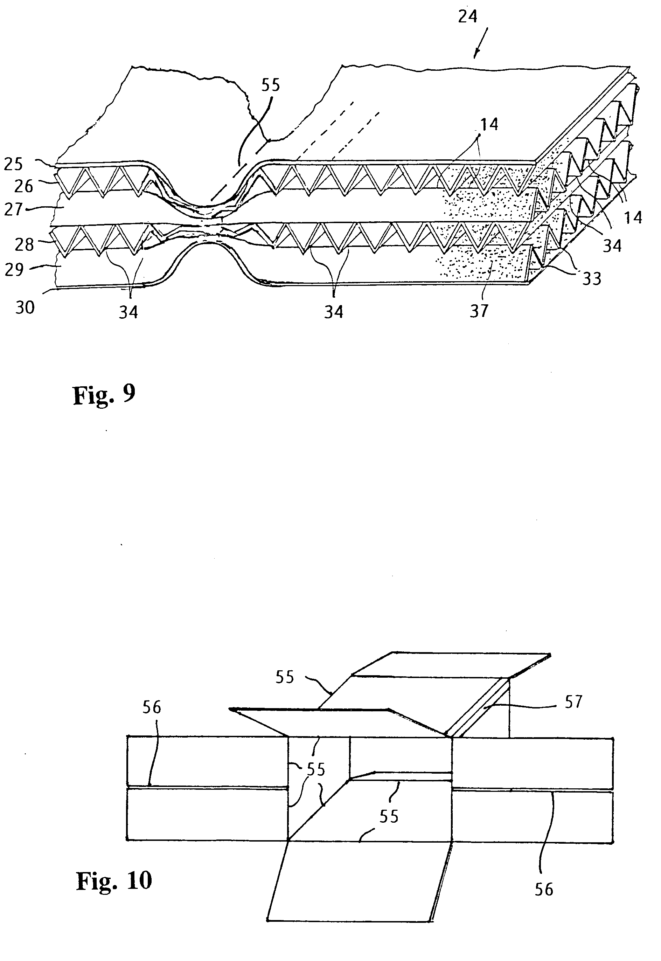

Fig. 9 zeigt eine Variante der Verbundplatte, die sich von der Verbundplatte nach Fig. 4 durch das Vorhandensein einer Knicklinie 55, die die Eigenschaft eines Scharniers hat, unterscheidet. Die Knicklinie 55 ist durch Thermoformung gebildet, indem über den Erweichungspunkt des verwendeten Kunststoffs erhitzte Linienstempel von oben und unten, gegebenenfalls auch nur von einer Seite, in die Verbundplatte eindringen und sich auf eine Entfernung von beispielsweise 0,5 mm aneinander annähern, wodurch an dieser Stelle die Profilstrukturen niedergeschmolzen und gegebenenfalls auch die Dicke der die Lagen bildenden Platten verringert wird. Bei Polypropylen kann beispielsweise eine Falzzahl bis zu 2000 erzielt werden. Werden einzelne der linearen Stempel bis auf einen Abstand von null aneinander angenähert. so wird an dieser Stelle die Verbundplatte durchgeschnitten und es entsteht eine Schnittlinie 56 (Fig. 10). Durch ein passendes Gitter an teils mehr teils weniger vorstehenden solchen linearen Stempeln läßt sich ein Knick- und Schnittlinienmuster in die Verbundplatte einprägen, das es erlaubt, die Verbundplatte als Verpackungseinheit wie beispielsweise einen Karton oder eine Schachtel aufzufalten. Fig. 10 zeigt ein Beispiel eines solchen Kartons, bei dem entlang einer Kante ein Biegescharnierstreifen 57 aus biegsamem, also leicht falzbarem Material aufgeklebt oder aufgeschweißt ist, um an dieser Stelle eine Scharnierlinie zu schaffen. Sofern solche Verbindungen lösbar sein sollen, können sie beispielsweise durch Knüpfverbindungsmittel wie Noppen und Ausnehmungen hergestellt werden.

Fig. 9 zeigt als Material für den Karton ein flexibles, relativ kräftiges Material, das vier profilierte Lagen aufweist. Durch Verringerung der Zahl der profilierten Lagen kann ein leichteres, noch flexibleres Material geschaffen werden, das sich insbesondere für kleinere Schachteln eignet. Im Vergleich zu Schachteln aus Pappe oder Wellpappe stellen die Kartons und Schachteln aus der erfindungsgemäßen Verbundplatte wesentlich beständigere, wasserunempfindliche und durchstoßungsfeste Verpackungen dar.

Die Platte 24 kann an ihren Außenflächen noch besonderen Behandlungen unterworfen werden, wenn spezifische Anforderungen vorliegen. Während für eine wiederverwendbare Schalung glatte, aber nagelbare Oberflächen erwünscht sind, kann nach Kundenwunsch die Oberfläche auch mit einer Struktur oder einem Muster versehen werden, beispielsweise indem die Basisplatte 1 im noch erwärmten Zustand einen Prägekalander durchläuft. Fig. 11 veranschaulicht außerdem die Möglichkeit, auf die Außenschicht 2 der Basisplatte zunächst ein Glasfasergewebe 61 aufzubringen, das mittels Durchlauf durch eine Kalanderanordnung mit der vom Extrudieren noch weichen Außenschicht 2 verbunden wird, und dann hierauf wiederum mittels eines Extruders 62 eine glatte Kunststoffschicht 63 aufzubringen. Eine derartige ergänzte Ausführung der Basisplatte 1 ist dann nur für die Außenlagen 25 und 30, nicht aber zur Herstellung der profilierten Platten 13 sinnvoll.

## Patentansprüche

1. Verbundplatte aus Kunststoff für Bauzwecke, mit einem Verbund umfassend zwei Außenschichten (2, 4) und eine Mittelschicht (3) aus Polymeren aus der gleichen stofflichen Gruppe, dadurch gekennzeichnet, daß der Verbund (1) ein mehrschichtig extrudierter Verbund ist, dessen Mittelschicht (3) aus einem hochkristallinen Polymer mit eingebauten zugfesten Fasern besteht, dessen Schmelzpunkt wenigstens 15° C höher liegt als die Schmelzpunkte der Polymere der Außenschichten (2, 4) und deren Elastizitätsmodul um wenigstens 10 % niedriger ist als die Elastizitätsmodule der Polymere der Außenschichten.

2. Verbundplatte nach Anspruch 1, dadurch gekennzeichnet, daß die Polymere Polyolefine, vorzugsweise Polypropylene, sind.

3. Verbundplatte nach Anspruch 1 oder 2, dadurch gekennzeichnet, daß die zugfesten Fasern im Polymer der Mittelschicht chemisch gekoppelte Stahl-, Glas- oder Kohlefasern sind.

4. Verbundplatte nach einem der Ansprüche 1 bis 3, dadurch gekennzeichnet, daß sie wenigstens zwei Lagen (20, 21) umfaßt, die jeweils für sich aus dem mehrschichtig extrudierten Verbund (1) bestehen und von denen eine eine ebene Lage (20) und die andere eine profilierte, nämlich ein Wellenprofil mit in einer Ebene liegenden Scheitellinien (14) aufweisende Lage (21) ist, und daß diese Lagen entlang den Scheitellinien auf einer Seite der profilierten Lage miteinander verschweißt sind (bei 22).

5. Verbundplatte nach Anspruch 4, dadurch gekennzeichnet, daß das Wellenprofil ein Zick-Zack-Profil ist und die Scheitellinien (14) zueinander parallele Kanten sind, zwischen denen Flanken (15) liegen.

6. Verbundplatte nach Anspruch 5, dadurch gekennzeichnet, daß die profilierte Lage (21) einen Volumen-Füllungsgrad von 30 % bis 50 % aufweist und die Außenseiten der Flanken (15) des Wellenprofils unter einem Neigungswinkel zwischen 30° und 60° an der Scheitellinie (14) zusammenlaufen.

7. Verbundplatte nach einem der Ansprüche 4 bis 6, dadurch gekennzeichnet, daß sie mehrere profilierte Lagen (26, 27, 28, 29) aufweist, die miteinander verschweißt sind, wobei jede dieser Lage zueinander parallele Scheitellinien (14) aufweist und die Scheitellinien von jeweils benachbarten profilierten Lagen zueinander einen Winkel von über 20°, vorzugsweise einen rechten Winkel, einnehmen.

8. Verbundplatte nach Anspruch 7, dadurch gekennzeichnet, daß zwischen wenigstens zwei benachbarte profilierte Lagen (46, 47) eine Zwischenplatte (38, 51, 52) eingefügt ist, die mit den Scheitellinien (14) der daran anliegenden profilierten Lagen verschweißt ist und ebenfalls aus dem mehrschichtig extrudierten Verbund (1) besteht.

9. Verbundplatte nach einem der Ansprüche 4 bis 8, dadurch gekennzeichnet, daß über die Verbundplatte (24) wenigstens eine Knicklinie (55) verläuft, in der die Lagen örtlich unter Bildung eines Biegescharniers niedergeschmolzen sind.

10. Verbundplatte nach Anspruch 9, dadurch gekennzeichnet, daß in der Platte Ausschnitte (56) mit Rändern gebildet sind und entlang wenigstens einem Teil der Ausschnittränder Verbindungsmittel, vorzugsweise lösbare Knüpfverbindungsmittel, zum Verbinden aneinanderlegbarer Ausschnittränder gebildet sind, und daß Randpartien der Verbundplatte (24) durch aufgeklebte oder aufgeschweißte Biegeschamierstreifen (57) miteinander verbunden sind, wobei das Muster der Knicklinien (55) und Ausschnitte (56) einen Kartonzuschnitt ergibt.

11. Verbundplatte nach einem der Ansprüche 4 bis 10, dadurch gekennzeichnet, daß die beiderseitigen Wellentäler der profilierten Lage(n) ausgeschäumt sind (37).

12. Verfahren zum Herstellen einer Verbundplatte nach einem der Ansprüche 4 bis 11, dadurch gekennzeichnet, daß man das Material (1) der Lagen (20, 21; 25 - 30) jeweils plattenförmig durch mehrschichtiges Extrudieren herstellt und aus einem Teil dieses Materials die profilierten Lagen (21; 26 - 29) durch Tietziehen unter Verstreckung bei einer Temperatur, bei der in der Mittelschicht (3) eine orientierte Struktur erzeugt wird, die aber unter der Schmelztemperatur liegt, herstellt, und man dann die Lagen auf eine Temperatur bringt, die zwischen den Schmelzpunkten der Mittelschicht (3) und der Außenschichten (2,4) der Lagen liegt, und sie zum Verschweißen in diesem erwärmten Zustand mit Kanten- bzw. Punktekontakt aufeinanderlegt und aneinanderdrückt.

13. Verfahren nach Anspruch 12 zum Herstellen einer Verbundplatte aus mehr als zwei Lagen (25 - 30), dadurch gekennzeichnet, daß man die Lagen in mehreren Schweißschritten miteinander verbindet, bei denen man jeweils nur Verbindungen in einer einzigen Verbindungsebene zwischen zwei Lagen erzeugt.

14. Verfahren nach Anspruch 12 oder 13, dadurch gekennzeichnet, daß man die jeweils linien- oder punktweise zu verschweißenden Plattenseiten unmittelbar vor dem Verschweißen erhitzt und mit einem heiß aufgebrachten aufschäumenden Material überzieht.

15. Verfahren nach einem der Ansprüche 12 bis 14, dadurch gekennzeichnet, daß man zum Herstellen der profilierten Lagen (21; 26 - 29) die eben extrudierten Platten (1) abkühlen läßt, dann auf eine die Kristallüberstrukturen lösende Temperatur erwärmt, sie anschließend auf eine zum Verstrecken geeignete Temperatur abkühlt und sie dann durch Tiefziehen profiliert.
